# EUROPEAN PATENT APPLICATION

(11) **EP 3 041 208 A1**
(43) Date of publication of application: **06.07.2016**
(21) Application number: 14382582.6
(22) Date of filing: 30.12.2014
(51) Int. Cl.: H04M 3/42

(54) **Method for determining an optimal communication device for a communication**

(71) Applicant: Telefonica Digital España, S.L.U., 28013 Madrid (ES)
(72) Inventor: Neystadt, John Eugene, 28013 Madrid (ES); Grunenberger, Yan, 28013 Madrid (ES); Artunedo, David, 28013 Madrid (ES)
(74) Representative: Carpintero Lopez, Francisco

(57) **Abstract**

Present invention refers to a method for determining an optimal communication device, from a set of communication devices belonging to a user, for a communication in a telecommunication network. Present invention comprises the steps of: collecting usage data of the user and information of each device from the set of devices; determining a parameter for each device, based on collected information, said parameter indicating at least quality and availability of the device; and determining the optimal communication device based on collected data usage of the user and the parameters obtained for each device.

## Description

### TECHNICAL FIELD OF THE INVENTION

Present invention generally relates to the technical field of media communications over telecommunication networks and more specifically it is related to automatically determining optimal devices for communications.

### BACKGROUND OF THE INVENTION

Nowadays, many users have multiple communication devices which connect to different communication networks over multiple channels as WiFi, 3G, etc. It can be mobile phones, tablets, personal computers, laptops, home phones or any other hybrid used by people in their communications.

Besides this diversity of devices, mobility is one of the main features required by current communications, which have become an essential part of our lives, so Industry is still working on finding effective ways to combine the need of been connected with our daily routines and taking advantage of the multiple communication devices of a same user. Moreover, as media services are being incorporated to traditional communications, selecting features of different network and devices is gaining importance in order to offer a satisfactory experience to the users.

Prior art offers some solutions to this problem, which often appears when users are getting around and so, network conditions may vary. For example, a user having an open call (voice, video, etc), or even using video streaming may be willing to handover the open call to a different communication device or channel as he is approaching to a non coverage area, but handover a call is a known technique which requires user intervention to indicate, either on source or target device, he wants to transfer the call and then, approving the handover on the second device. Alternatively, he may prefer using a free WiFi network to establish a communication over GSM during roaming.

Therefore, handover a call and media communications in general is a known procedure, but the prior art is missing a global solution determining optimal devices to conduct a communication which automatically trigger the handover in order to really taking advantage of all the features available from communication devices of a user.

### SUMMARY OF THE INVENTION

Present invention solves the aforementioned problems by offering a solution to automatically detect conditions, upon which it may be beneficial for the user to perform a call handover based on the context of the user and user's devices. Thus, communications are conducted by the most suitable device of the user. According to a first aspect of the present invention, it is presented a method for automatically determining an optimal communication device, from a set of communication devices belonging to a user, for a communication in a telecommunication network, the method comprises the steps of:
a) collecting usage data of the user and information of each device from the set of devices;
b) determining a parameter for each device, based on collected information, said parameter indicating at least quality and availability of the device;
c) determining the optimal communication device for the communication based on collected data usage of the user and the parameters obtained for each device.

The present invention considers the possibility of the communication is an incoming communication directed to the user, further comprising routing the incoming communication to the optimal device.

The present invention considers the possibility of the communication is an outgoing communication initiated by the user.

Additionally, once a communication is established either an incoming communication with a first communication device selected as the optimal device or an outgoing communication from a device selected by the user, present invention may further comprise the steps of:
- periodically repeating steps a) b) and c); and
- in the case of determining the optimal device according to step c) results in a second communication device different than the first, sending an indication message to the first communication device.

Therefore, even when a communication is established, the method keep running a loop for constantly assessing context conditions in order to offer the most optimal device at any instant.

Indication messages may comprise an invitation message prompting the user to transfer the established communication to the second communication device.

Additionally, the user may accept the invitation message and then, the established communication is transferred to the second device.

According to one embodiment of the invention, a handover invitation is sent to the first device, and after the user accepting it in said first device, it is further comprised sending a communication invitation to the second device, and after the user accepting said incoming communication invitation, it is further comprised establishing the communication with said second device and finally, releasing the communication from the first device.

Alternatively, according to another embodiment of present invention, a handover invitation is sent to the second device, and after the user accepting the invitation in said second device, it is further comprised establishing the communication with said second device and then, releasing the communication from the first device.

According to one embodiment of the invention, usage data of the user comprises location information, IP address of the user and/or roaming status.

According to one embodiment of the invention usage data of the user comprises application data based on biometrics signals acquired by sensors of the communication devices. Thus, it can be obtained information about his availability for communication as sensors may reveal if the user is sleeping, doing sports or any other activity compatible with a communication.

According to one embodiment of the invention, usage data of the user may further comprise user availability data based on a user calendar. Thus, it can be determined if the user is attending a meeting, working or at home, which have different consequences about his availability.

Present invention considers the possibility of comprising motion information, provided by a motion sensor of a communication device, as part of the collected information from a communication device, being said motion information an indicator of availability.

Present invention considers the possibility of comprising at least a network quality indicator as part of the collected information from each communication device. The network quality indicator may be based on an antenna coverage map providing a distance from available antennas to the device and a number of users connected to each available antenna.

According to one embodiment of the invention, information related to communication devices may comprise network characteristics selected from: cellular connection in roaming status and/or network connection with low quality as reported for previous communications conducted from that network.

In a particular embodiment of present invention it is consider that communication devices connect to different telecommunication networks and it is provided an accessible node which makes available usage data and collected information of each device.

According to one embodiment of the invention, collecting information of a device comprises the device sending a signaling SIP message containing the information to an access gateway, where it is accessible for the telecommunication network. Thus, it is solved any compatibility problem that would be caused by different networks.

Alternatively, according to one embodiment of the invention, collecting information of a device comprises the device sending an update to an external server, where updated information is accessible for the telecommunication network.

A second aspect of present invention refers to a system for automatically determining an optimal communication device for a communication in a telecommunication network. The system comprising:
- a set of communication devices belonging to a user,
- at least one node configured for:
   a) collecting usage data of the user and information of each device from the set of devices;
   b) determining a parameter for each device, based on collected information, said parameter indicating at least quality and availability of the device;
   c) determining the optimal communication device based on collected data usage of the user and the parameters obtained for each device.

The present invention comprise the possibility of the communication is an incoming communication directed to the user, and then the node is further configured to routing the incoming communication to the optimal device.

Additionally, once a communication is established with a first communication device, present invention may further comprise the node configured to:
- periodically repeating steps a) b) and c);
- if determining the optimal device according to step c) results in a second communication device different than the first communication device, sending an invitation message prompting the user to transfer the established communication to the second communication device;
- accepting the invitation message by the user;
- transferring the established communication to the second device.

A final aspect of present invention refers to a computer program product comprising computer program code adapted to perform the method according to any of the claims when said program code is executed on a computer, a digital signal processor, a field-programmable gate array, an application-specific integrated circuit, a micro-processor, a micro-controller, or any other form of programmable hardware

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a drawing wherein, by way of illustration and not restrictively, the following has been represented:
**Figure 1****.-** shows a particular embodiment of the invention where a user having a communication through a first device, routes said communication to a second device.
**Figure 2****.-** shows a particular embodiment of the invention where different sources of information are provided for collecting user's context information.

### DETAILED DESCRIPTION OF THE INVENTION

The present invention may be embodied in other specific methods and/or systems. Described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

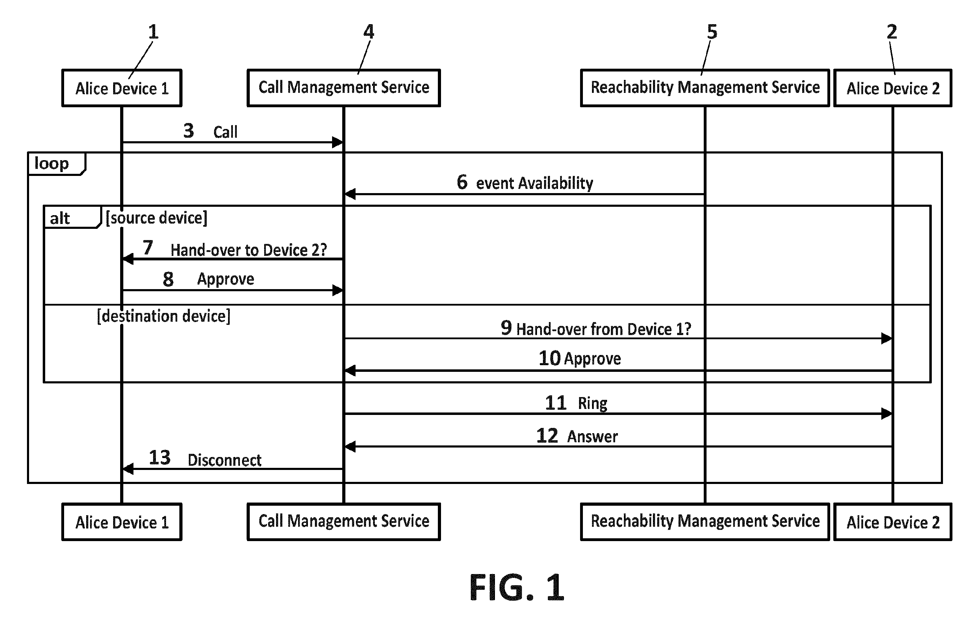

Figure 1 describe one particular embodiment of the invention where a user called Alice, using a device 1 (1), is having a bi or uni-directional communication (3), such as doing voice or video call, receiving video broadcast, which involves sending continuous stream of media with a call management service (4), which can be implemented as next generation intelligent network (NGIN) orchestrating service and media relay or IP Multimedia Subsystem (IMS) Application Server or similar. Then, the call management service collects user's context of devices previously registered in the service, for example using a reachability management service (5) in charge of retrieving user's devices information once a call is established. Thus, it is obtained an indication about which Alice's devices are reachable and with which quality level. When the call management service receives an indication (6) that one of other Alice's devices is available, or when network conditions change and, in response, it is triggered a network change event and then, properties associated with that device are evaluated, comprising for example:
- **<inactive> -** awareness of whether user has not used the device over a certain period of time.
- **<busy> -** the user is using the device for other activities.
- **<high-cost> -** the device is connected to a network where the user is unlikely to wish to accept the call.
- **<low-quality> -** the device is connected to a network, which is known to involve a bad quality of audio/video.
- **<no-connectivity> -** the device is connected to a network with no-connectivity in that area.

According to these properties, the call management service can determine when it should send (9) a hand-over offer prompting to transfer the call to Alice's Device 2 (2), or send (7) it to current device which Alice is using. Evaluating properties can be done according to configurable rules and thresholds configured by either the system or user. If the device matches the rules, a hand-over invitation is offered to Alice for transferring the call, and if it is approved (8,10), the call management service rings (11) the Alice's Device 2 (or in case that approval was done on Device 2, the ringing can be initiated by Device 2 itself). Once the call is approved (explicitly by user of Device 2, if hand-over was approved on Device 1, or implicitly by communication software on Device 2, if hand-over was already approved on Device 2) and the communication stream is established (12) with Alice's Device 2, the call management service disconnects (13) the original call established with Alice's Device 1.

Alternatively, the call management service, can inquire reachability management service when a new communication is incoming, and choose which device seems to be the most optimal to route the incoming call. So that if user is located in the office, his desk phone would ring, but if he is in the move, his mobile phone will ring.

Furthermore, the call management service can be configured to reject a call or route it to voicemail according to the user context, for example if user is sleeping.

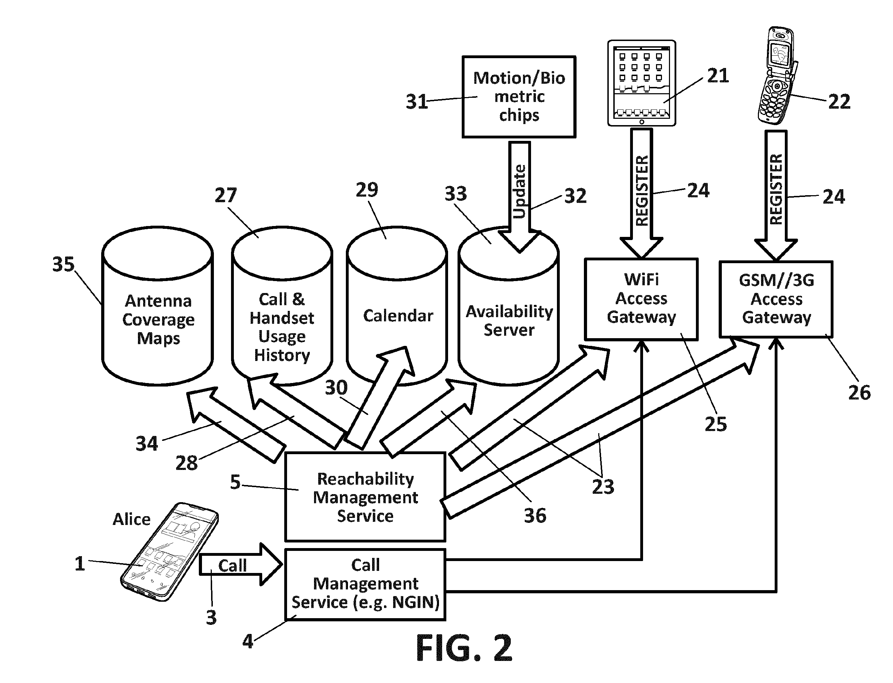

Figure 2 shows a set of methods that can be used by the reachability management service (5) to collect user-context and generate events about device availability. The reachability management service can implement the logic by itself, or being an extensible platform, which can be extended with additional logic to measure connection quality and availability, as devices become available. The reachability management service can comprise, according to different embodiments of the invention, any combination of one or more ways to access the following elements of device information:
- Obtaining user location / roaming status and setting a "high-cost" property: the reachability management service can access (23) to an online database where user's devices (21, 22) have been previously registered (24), mainly through the access gateway (25, 26) of different networks. This can be servers such as HSS in IMS networks or HLR in 3G networks. The reachability management service sends queries to these servers using some application programming interfaces (API) or protocols that they expose (LDAP, DNS, SQL, etc). Then, it is retrieved the IP address of the endpoint (for VoIP or LTE networks), which can be translated to a geographical location, for example using IP2LOCATION databases widely available. The reachability management service compares the geographical location with a preprovisioned home location of the user and determines whether user is roaming, and thus whether the cost of his connection is high.
   About the roaming status, it can be checked whether the device is registered in the HSS/HLR or it is connected via a partner's network, registering via a VLR. Again, this information is used to determine, whether user is roaming and a "high-cost" should be indicated for that device.
   Alternatively, other embodiment resort to GPS location of user's device, that can be optionally included inside signaling, such as SIP message sent by the device to the Access Gateway (26).
   For a Wifi access point, determining a location is based on triangulation of the device, including a device location inside signaling, such as a SIP message sent by the device to the Access Gateway (25).
- Expected "low-quality" of a call property:
   o can be based on past call patterns. When finishing each call, call quality information and a result of the call (hung up by the user or dropped) can be reported and stored in a Call and Handset Usage History module (27), recording information on source, destination, duration, call quality, and location of each call as it is performed, including network information from the connected device, such as unique WiFi BSSID identifier or Autonomous System number that can be extracted from IP subnet of the client. A collection of network quality indicators from WiFi access points or 3G, 4G networks can be used to collect network quality level (for example, reconnect attempts). The quality information collected from the device can be included inside signaling, such as SIP messages sent by the device to the access gateway or via direct updates from the device to an availability server (33) that will collect and store this information for later access (36) by the reachability management service. The reachability management service can process those events and calculate average call quality rates based on reported results from multiple calls. The reachability management service can query (28) this module with the IP of the user device, and receive indications of a significant share of calls on this network had bad quality and, consequently, turn on a <low-quality> property for that device.
   o Can be based on information in Access network gateway by querying federated access Gateway (such as SIP proxy in 4G networks), Wi-Fi Access Point in case federated WiFi network is used or using other methods. The network quality information can be used to determine the <low-quality> parameter of the network the device is connected to.
- User activity determines whether the user is "busy" or not, which implies his availability for receiving calls: users publish their calendars in calendar servers (29), such as Google Calendar or Microsoft Exchange Calendars. Calendars can be accessed (30) using protocols such as iCAL and WebDav. By extracting information from user calendar, the reachability management service can determine what the user is currently doing. Sometimes calendar can include labels such as "private" or "business" that can help determine what kind of activity the user is busy with. The fact that the user is "busy" can be used by the reachability management service to determine that the user is not available for the call. In addition the reachability management service can compare the caller with a list of participants in a meeting, according to the calendar, and then, calls from those participants are allowed, but calls from other people will be rejected.
- For detecting that the user is in motion or busy ("in-motion"/"busy" parameters), the call reachability management service can proactively inquire device status every configurable interval of an ongoing communication by sending an event to the device and receiving response to that event. For example, the event can be sent using push notification mechanisms available in all devices and storing them in a server (33) for a later access (36) from the reachability management service, or other signaling protocol, such as SIP. Then, after receiving the inquiry, the device can obtain activity information from a GPS module embedded in the device or from special motion detection hardware (such as Apple_M7 chip) or other biometric hardware (31), such as sleep detectors. The response can be sent over same signaling protocol or via separate end-point, such as performing RESTful API call over HTTP to the reachability management service and finally, when receiving the "in-motion" event, the reachability management service can then transfer the call to the device which is in-motion, assuming that the user is located in proximity of that device during the time of the motion.
- In order to determine whether the user is "inactive", the communication device tracks, when the user did his last action over the device (for example by storing the last time it was touched its screen). This information is reported (32) to an availability server (33) periodically, or dynamically extracted from the device by querying the device during the call, similarly as it was described before. If a user has not used the device over a configurable period of time (for example, 20 minutes), the reachability management service can consider such device as being "inactive" and avoid routing calls over that device.
- Preventing that the device approaches to an area with low coverage or even a no-connectivity area ("no-connectivity" parameter), the reachability management service queries (34) a database of antennas (35), with current coordinates of the device. It can be estimated a network quality according to the distance to the antenna and a known number of users connected to that antenna at the given moment. Then, becoming aware of whether an antenna is available in a configurable proximity of the device (for example, 300 meters), the reachability management service can set a "no-connectivity" property determining when to avoid transferring call to a device which will be soon off-range. The reachability management service can also set the "no-connectivity" property determining when to avoid offering to transfer a call to a different device, when this device is going to be off range soon. The reachability management service can also collect device coordinates and check if there are any changes over time, so that only if device is moving in the direction of no connectivity zone, then "no-connectivity" property is indicated.

Therefore, the properties of "no-connectivity", "inactivity", "busy", "in-motion", "low quality" and "high cost" have been disclosed in order to illustrate the present invention with specific embodiments, but many other properties could be used to model user's context and determine the optimal device for routing a communication

## Claims

1. Method for automatically determining an optimal communication device, from a set of communication devices belonging to a user, for a communication in a telecommunication network, the method comprises the steps of:
a) collecting usage data of the user and information of each device from the set of devices;
b) determining a parameter for each device, based on collected information, said parameter indicating at least quality and availability of the device;
c) determining the optimal communication device for the communication based on collected data usage of the user and the parameters obtained for each device.

2. Method according to claim 1, wherein the communication is an incoming communication directed to the user, further comprising routing the incoming communication to the optimal device.

3. Method according to any one of previous claims, wherein the communication is established with a first communication device, further comprising:
- periodically repeating steps a) b) and c);
- if determining the optimal device according to step c) results in a second communication device different than the first communication device, sending an indication message to the first communication device.

4. Method according to claim 3, wherein the indication message further comprising an invitation message prompting the user to transfer the established communication to the second communication device.

5. Method according to claim 4 further comprising the steps of:
- accepting the invitation message by the user;
- transferring the established communication to the second device.

6. Method according to claim 3, wherein the communication is an outgoing communication initiated by the user.

7. Method according to any one of the previous claims wherein usage data of the user comprises location information, IP address of the user and/or roaming status.

8. Method according to any one of the previous claims wherein usage data of the user further comprising application data based on biometrics signals acquired by sensors of the communication devices.

9. Method according to any one of the previous claims wherein the information of a communication device comprises motion information provided by a motion sensor of the communication device, being the motion information an indicator of availability.

10. Method according to any one of the previous claims wherein the information of each device comprises at least a network quality indicator.

11. Method according to any one of the previous claims wherein collecting information of a device further comprising the device sending a signaling SIP message containing the information to an access gateway, where it is accessible for the telecommunication network.

12. System for automatically determining an optimal communication device for a communication in a telecommunication network, the system comprising:
- a set of communication devices belonging to a user,
- at least one node configured for:
a. collecting usage data of the user and information of each device from the set of devices;
b. determining a parameter for each device, based on collected information, said parameter indicating at least quality and availability of the device;
c. determining the optimal communication device for the communication based on collected data usage of the user and the parameters obtained for each device;

13. System according to claim 12 wherein a communication is an incoming communication directed to the user, the node is further configured to routing the incoming communication to the optimal device.

14. System according to any one of claims 12-13 wherein a communication is established with a first communication device, the node is further configured to:
- periodically repeating steps a) b) and c);
- if determining the optimal device according to step c) results in a second communication device different than the first communication device, sending an invitation message prompting the user to transfer the established communication to the second communication device;
- accepting the invitation message by the user;
- transferring the established communication to the second device.

15. Computer program product comprising computer program code adapted to perform the method according to any of the claims 1-11 when said program code is executed on a computer, a digital signal processor, a field-programmable gate array, an application-specific integrated circuit, a micro-processor, a micro-controller, or any other form of programmable hardware.
